Europäisches Patentamt

European Patent Office

Office européen des brevets

(19)

(11) Publication number: **0 140 527 B1**

(12) **EUROPEAN PATENT SPECIFICATION**

(45) Date of publication of patent specification: **14.08.91**      (51) Int. Cl.⁵: **G06K 9/03**

(21) Application number: **84305873.6**

(22) Date of filing: **29.08.84**

(54) Document reading system.

(30) Priority: **28.10.83 GB 8328920**

(43) Date of publication of application:
**08.05.85 Bulletin 85/19**

(45) Publication of the grant of the patent:
**14.08.91 Bulletin 91/33**

(84) Designated Contracting States:
**BE DE FR IT NL SE**

(56) References cited:
**EP-A- 0 107 084**
**EP-A- 0 115 189**
**US-A- 3 903 517**
**US-A- 4 088 981**

**IBM TECHNICAL DISCLOSURE BULLETIN, vol. 20, no. 1, June 1977, pages 241-243, New York, US; D.C. LANCTO: "Simple optical feedback for MICR E13B encoder"**

(73) Proprietor: **UNISYS CORPORATION**
**1, Burroughs Place**
**Detroit Michigan 48232(US)**

(72) Inventor: **Bateman, Ian Mills**
**115 Preston Road**
**Linlithgow West Lothian Scotland(GB)**
Inventor: **Bryant, John David**
**3 Kepscarth Grove**
**Whitburn West Lothian Scotland(GB)**

(74) Representative: **Kirby, Harold Douglas Benson et al**
**G.F. Redfern & Company Marlborough Lodge 14 Farncombe Road**
**Worthing West Sussex BN11 2BT(GB)**

## Description

The present invention relates to a system for reading a predetermined character set from a document simultaneously with capturing an image of the read characters for subsequent correction of erroneous characters. It particularly relates to such a system for use in banking equipment such as cheque encoders, but is not restricted to this use.

Cheque encoding equipment includes a printed character reader for reading characters on the cheque or other document presented thereto. The characters which are read are presented to a central processing unit which employs the information so gained for the automatic control of the transaction records to which the document relates. For example, the reader can read numbers relating to cheque account numbers, bank indentity, customer identity, and even amounts of money. The characters it reads can be optical characters of a predetermined format or formats, or can be printed in magnetic ink or other detectable medium. The characters can include a number set, the alphabet and other transaction characters used on cheques. The characters enjoy the dual property of being readable both by a human reader and by the automatic character reader.

The character reader includes character recognition logic operable to decode the signal sequence from a transducer interacting with the characters on the document to provide output to the control unit indicative of the characters with which it interacts. There is an inevitable error rate with the character decoding logic due to imperfect character alignment, document damage, and inadvertent writing in the area of the characters. Any errors in the data have to be corrected by physical stopping of the document for viewing by an operator who can compare the captured data as shown on a display with the document itself. In general, the document passes the transducer at speeds approaching 3 metres per second, and it is therefore a difficult task to stop the document at a predetermined point for the operator to make a manual correction via the keyboard. A better alternative has been the use of document image capturing systems, but this has necessitated the use of television cameras and the like at considerable cost, and having the disadvantage that the document cannot move as quickly as would otherwise be desirable in the field of view if the image is to be captured. It is therefore desirable to provide a low cost high speed image capturing system.

United States Patent 3,903,517 recites a system wherein a transducer is used to capture both character decoding information and an image of characters from a passing document, a decoded version of the characters and an image of uncertain characters being displayed for manual correction. US Patent 3,903,517 uses an abort character to indicate an improperly or uncertainly decoded character from on the document. By contrast, the present invention seeks to provide improvement thereover by displaying the most probable value of the uncertainly decoded character so that no correction is necessary should the uncertain detection process prove to have been correct. The present invention further seeks to provide thereover by employing character detectors which automatically control the allocation of image storage space in a memory.

United States Patent No. 4,088,981 discloses a system in which a hand-held photoelectric wand scans a document bearing alphanumeric characters and reads these characters by generating electrical signals which correspond to the optical characters of the scanned information. The generated electrical signals are stored and compared with each character matrix in a designated acceptable character set. After all comparisons are made, the character matrix which is most similar to the stored electrical signals is selected as representing the scanned character.

The present invention consists in a system for reading characters from a document, said system comprising: a transducer for scanning the document and for providing, as an output, a serial succession of signals representative of images on said document; a character reader for receiving and decoding said output of said transducer and for providing a data output representative of the particular character scanned by said transducer whenever said output of said transducer is representative of one from a predetermined plurality of characters, and for providing an error output whenever said output of said transducer is insufficient for the accurate decoding of an uncertain character; an image store for retrievably storing an image, derived from the output from said transducer; and a control unit for receiving said data and said error outputs from said reader; said control unit being operable in response to said error signal from said reader to perform a display and correction operation including: transfer from said data output of said reader, to a first portion of a display unit, in response to said uncertain character, of a representation of said data output of said character reader; and transfer of said image to a second portion of said display unit; said control unit being operable thereafter to receive, in place of said data output of said reader for said uncertain character, an externally provided signal indicative of the true nature of said uncertain character; said system being characterized by comprising a coarse character detector for receiving said output from said transducer and for providing a detected character output indicative of each occasion of said transducer scanning marks on the document representative of any from among said predetermined plurality of characters which are not spaces; and an address store for receiving said output from said character detector and for monitoring and storing the storage location in said image store whereat said image from said transducer is stored for each character detected by said coarse character detector; said control unit being operable to receive the storage location from said address store for said uncertain character and to apply said received storage location as a retrieval address to said image store for the retrieval therefrom of said stored image from said transducer, derived from scanning said uncertain character, for transfer to said second portion of said display unit.

In a preferred embodiment, a document moves in a fixed track by means of a drive system past a transducer in fixed relation to the track for a number sequence on the document to be interactive with the transducer as it passes thereby. The document is preferably a cheque. The transducer is preferably optical. The output of the transducer is coupled to a character processing unit serving the dual function of image capture and character decoding. The character processing unit is operable to pass its captured image and decoded character data to a data processing and control unit. In the event of a decoded character being of insufficient quality for certain recognition, or in the event of there being a parity error in the decoded characters received by the data processing and control unit, the data processing and control unit is operable to transfer to a visual display unit both the decoded character output of the character processing unit and its captured image data for visual comparison by an operator who can then move a cursor on the visual display and enter characters on a keyboard for the correction of any characters which are seen to be in error. The transducer preferably comprises an array of photodetectors disposed transversely to the path of the document, each member of the array being individually operable to provide instant output indicative of the optical state of that part of the document adjacent thereto. Each of the photodetectors in the array is preferably scanned in a sequence which, in combination with the document movement, effects a raster scan of the character bearing area of the document.

The character processing unit comprises character reader recognition logic for accepting the sequence of output signals from the transducer, and providing in turn its own output signal indicative of each character it identifies. The character reader recognition logic is further operable to indicate when a received sequence of inputs is of insufficient quality for the certain identification of a character. In this instance, the character reader recognition logic preferably provides as its output indication of the character it believes is most probably represented by the sequence of input signals from the transducer. The output of the character reader recognition logic is preferably coupled to a character reader result buffer which can be interrogated by the data processing and control unit for the transfer of decoded characters thereto. The error output signal from the character reader recognition logic, earlier described as being indicative of the quality of an incoming sequence of signals being insufficient for the certain identification of the character represented, is also coupled to the data processing and control unit. The output of the transducer is coupled as input to a document image store. The document image store cooperates with a serial-to-parallel converter to store, as a parallel binary word, the binary sequence of input signals in each column scan of the transducer, the sequence of binary words being stored in a sequence of locations to provide a complete stored image. The character processing unit further comprises a coarse character detector for monitoring the signal output of the transducer, and for providing its own output indicative of the transducer being interactive with a character. The character processing unit further comprises a pixel column counter incrementable on each occasion that the transducer completes a column scan. The pixel column counter provides the storage address location for the document image store. A dectected character column address store stores the address from the pixel column counter on each occasion that the coarse character detector indicates that the transducer has commenced interaction with a character on the document. The character processing unit further comprises a document detector for detecting when the transducer is adjacent to a document, and for inhibiting the pixel column counter whenever the transducer is not adjacent to a document.

In the event of the character reader recognition logic providing an error output signal, or of the data processing and control unit discovering a parity error in the data it receives from the character reader result buffer, the data processing and control unit calls up data from the document image store by means of the detected character column address store for display on a visual display unit.

The character reader result buffer contains a record of all received characters, including spaces. The document image store shows a complete scan of the document. The detected character column address store stores the start address of each character in the document image store which is not a space. The visual display unit is operable to display both binary data and one hundred per cent pixel images. The data processing and control unit displays the uncertain character or characters together with those characters preceeding and following it. It firstly displays the range of characters including the uncertain character as a digital display by transferring to the display unit characters it has received from the character reader result buffer. It secondly determines how many non-space characters from the document edge whereat the range of characters lie, and calls up the document image store column address from the detected character column address store. Using the called-up column addresses, the data processing and control unit then calls forth the appropriate stored images from the document image store, and transfers them as a one hundred per cent pixel image to the visual display unit. The data processing and control unit preferably aligns the decoded character images from the character reader result buffer with the corresponding portions of the image transferred from the document image store for one-to-one correspondence between the decoded character and its image in each case. The data processing and control unit is thereafter operable to accept a correction from a manual keyboard to the output received from the character reader result buffer, the correction being made by an operator in consequence of inspection of the decoded output and its corresponding captured image. The data processing and control unit is preferably operable to deal with several uncertain characters across a document in a single display and correction operation, missing out those characters which lie intermediate between ranges including an uncertain character.

The invention is further explained, by way of an example, by the following description in conjunction with the appended drawings, in which:-

Figure 1 shows a schematic block diagram of the character reading and image capture system;

Figure 2 shows an isometric view of the transducer of Figure 1 in relation to a scanned character;

Figure 3 shows an exemplary circuit diagram for the transducer of Figure 2;

Figure 4 shows a schematic block diagram of the elements of the character processing unit of Figure 1;

Figure 5A shows examplary contents of the character reader result buffer of Figure 4;

Figure 5B shows exemplary contents of the dectected character column address store of Figure 4 corresponding to the contents of the character reader result buffer shown in Figure 5A;

Figure 5C shows exemplary contents of the document image store corresponding to the contents of the other stores shown in Figures 5A and 5B;

Figure 6 shows an exemplary display of the visual display unit of Figure 1; and

Figure 7 shows a flow diagram of the operations performed by the data processing and control unit of Figure 1 for image display and operator initiated correction.

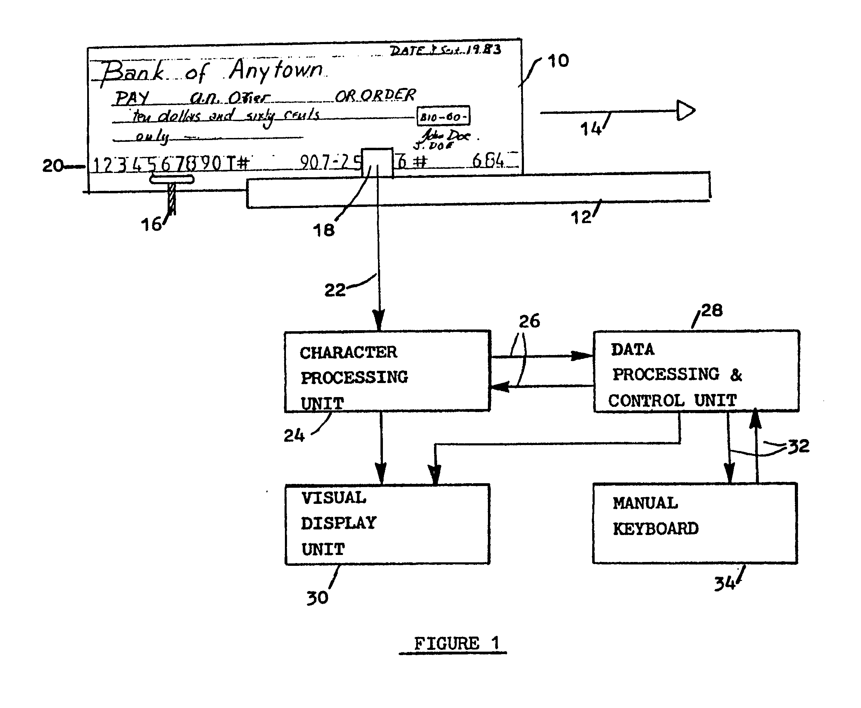

Figure 1 shows a schematic diagram of the overall character reading and image capturing system. The system is intended for use in a cheque encoder for use by banks in processing received cheques. This does not constitute a limitation upon the use of the invention. The invention can be used in any environment where it is desired to read characters from a document and to correct any reading errors.

A document 10 moves in a guide track 12 as indicated by a first arrow 14. The guide track 12 is for preference a slotted track wherein the document 10 slides. The guide track 12 can be any other form of track for guiding the document 10. The document 10 is urged to move along the guide track 12 by a pin wheel assembly 16 which grips the document 10 and pushes it along. It is to be understood that the document 10 may be driven in any other way which is operable to impart rectilinear constant speed motion to the document 10.

A transducer assembly 18 is fixed in relation to the guide track 12 to interact with a number sequence 20 on the document 10. The document 10 traverses in the direction of the arrow 14 past the transducer assembly 18 at a speed of 1.9 metres per second. As will be understood, this speed of traverse is purely chosen for preference and other speeds are equally acceptable.

A transducer coupling 22 couples the output of the transducer 18 to a character processing unit 24. The character processing unit 24 performs the dual function of character recognition and of character image capture. The character processing unit 24 is connected via a bi-directional control unit coupling 26 to a data processing and control unit 28. The data processing and control unit 28 receives recognized characters from the character processing unit 24 and can otherwise employ them in the overall running of the cheque encoder. The data processing and control unit 28 carries out a parity check on incoming decoded recognized characters and can determine when a decoded character is of uncertain value. The data processing and control unit 28 is further bidirectionally coupled by a keyboard coupling 32 to a manual keyboard 34. The manual keyboard 34 can be employed during other phases of the operation of the cheque encoding equipment for entering the amount of cheques, signatory's name, and so on, which activities do not form part of the present invention. The manual keyboard 34 in the present invention is employable to correct misread characters from the character processing unit 24. The data processing and control unit 28 is also coupled to a visual display unit 30 and can control what the visual display unit 30 displays. The visual display unit 30 is operable to receive display information from the character processing unit 24 either directly or via the data processing and control unit 28.

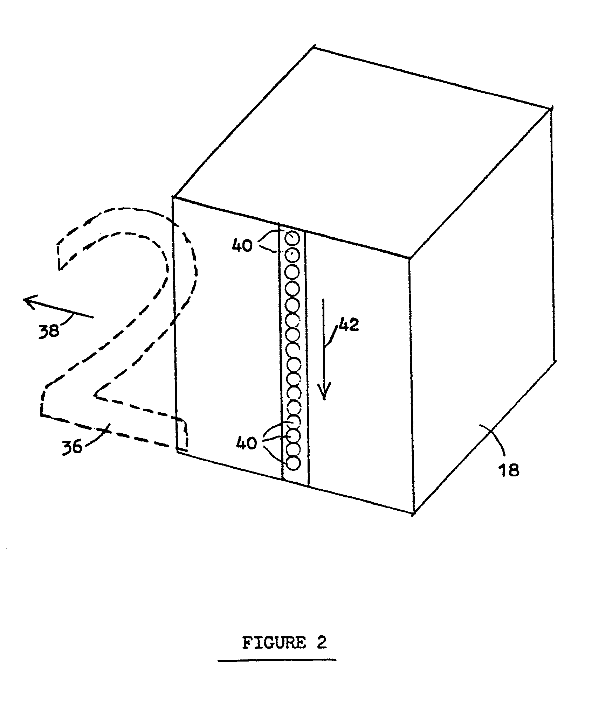

Figure 2 shows an isometric view of the transducer assembly 18. The transducer assembly 18 is viewed from the direction of the document 10 in Figure 1. A character 36 on the document 10 shown in phantom outline traverses the transducer assembly 18 as indicated by a second arrow 38. The transducer assembly 18 comprises an array of individual phototransistors 40 disposed transversely to the direction of movement of the character 36 relative to the transducer assembly 18. The individual phototransistors 40 are scanned in the direction of a third arrow 42 as the document 10 traverses the transducer assembly 18 thereby producing a raster scanning of the characters in the number sequence 20 analogous to the scanning of a television image.

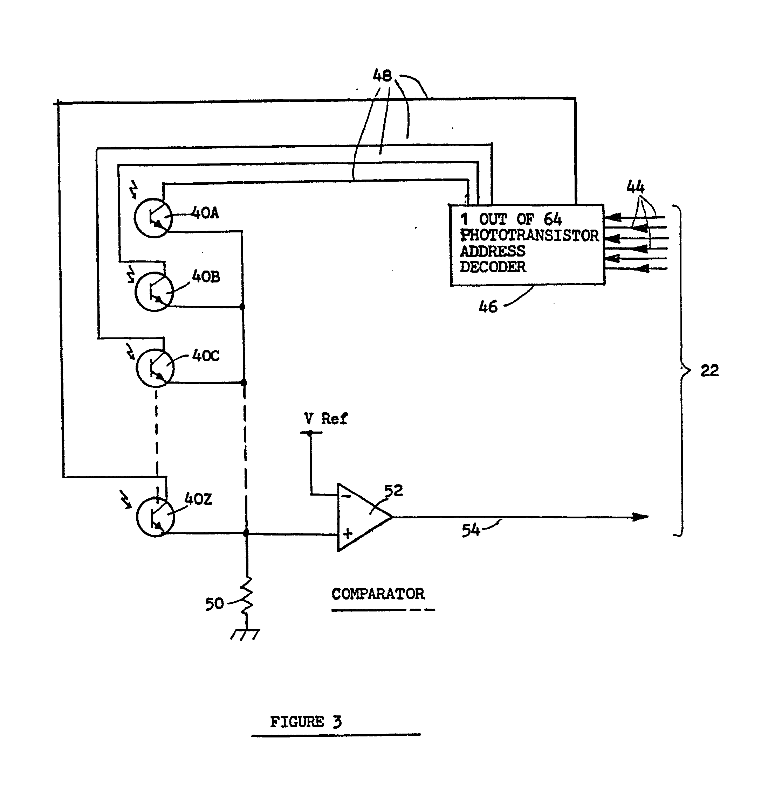

Figure 3 shows one particular manner of implementing control of the array of phototransducers 40 in the transducer assembly 18. The transducer coupling 22 comprises six binary address lines 44 for providing a binary address to a one out of sixty-four phototransistor address decoder 46. In response to receiving a particular binary address, the one out of sixty-four address decoder 46 activates a particular selected one from among sixty-four individual phototransistor select lines 48 by placing a positive voltage thereon. This has the effect of activating just one out of the array of phototransistors 40. In making a raster scan, the binary address on the binary address lines commences at the number 000000, increments by unit increments in unit time to the number 111111, and then returns to the number 000000 to recommence the scan. The binary address 000000 activates the topmost phototransistor 40A In the array, the binary number 000010 activates the second topmost phototransistor 40B in the array, the binary number 000011 activates the third topmost phototransistor 40C in the array, and so on until the binary number 111111 activates the bottom-most phototransistor 40Z in the array. Each of the phototransistors is an NPN device and shares a common emitter load 50. Only that phototransistor 40 having its phototransistor select line 48 at a positive potential is able to supply photocurrent to the common load 50. In this manner, each phototransistor 40 is polled. The voltage on the common load 50 is provided as the positive input to a voltage comparator 52, and a reference voltage VRef is provided as the negative input to the voltage comparator 52. The voltage comparator 52 provides a signal on an output line 54 which is logically true if the voltage on the common load 50 is more positive than the reference voltage VRef and is otherwise logically false.

The implementation of the transducer assembly 18 and of its control as described is not restrictive. It would be equally acceptable to interrogate the phototransistors 40 in parallel blocks to provide a sequence of parallel output signals in place of the raster scan. It is not necessary that there are sixty-four phototransistors 40 in the array, and a lesser or greater number can be employed. Phototransistors are used for preference where the document 10 is optically read, but the phototransistors 40 can be replaced with magnetic sensors where the document 10 is to be magnetically read.

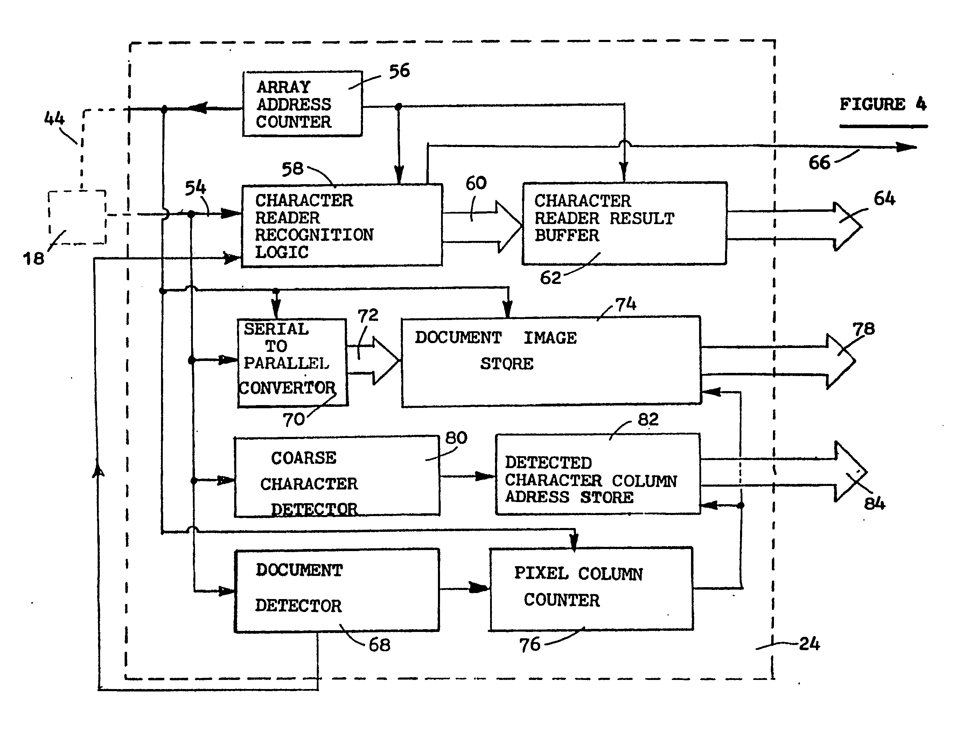

Figure 4 shows a schematic diagram of the constituent element of the character processing unit 24 of Figure 1.

The character processing unit 24 comprises an array address counter 56 for providing the binary address on the binary address lines 44 of the transducer assembly 18. The array address counter provides a cyclically repetitive count as earlier described at a fixed rate. In the preferred embodiment of the present invention, the array address counter 56 is clocked at the rate of 2.5 megahertz so that a document 10 traversing the transducer assembly 18 at a speed of 1.9 metres per second has a 3.2 millimetre wide character thereon scanned in sixty-four columns. Thus, in the preferred embodiment of the present invention, each character 36 on the document 10 is scanned sixty-four times by an array sixty-four points high. It is to be appreciated that each character 36 can be scanned a greater or lesser number of times within the embodiment of the invention. The clock source for the array address counter 56 can be internally generated within the character processing unit 24, or can be externally supplied by the data processing and control unit 28, so that the data processing and control unit 28 and the character processing unit 24 can operate in synchronism.

The character processing unit 24 further comprises character reader recognition logic 58. The character reader recognition logic is coupled to receive the comparator output line 54 from the transducer assembly 18. It is the function of the character reader recognition logic 58 to decide when the sequence of incoming signals on the comparator output line 54 is representative of one of a predetermined range of characters to be recognized. The exact manner of operation of the character recognition logic 58 is not part of the present invention. Any known device capable of fulfilling the function of character recognition and of detection of uncertain characters, as will be described, can be employed as the character reader recognition logic 58. As an example, the character reader recognition logic can comprise a shift register for accepting the sequence of logic signals from the comparator 52 and can provide indication of a match for a particular character if at any point less than a predetermined number of binary digits in the shift register disagree with a prerecorded set of stored binary digits ideally representative of the recognized character. Similarly the incoming stream of binary digits on the comparator output line 54 can be tested for angular components and that character selected having the matching set of angular components of the correct length. Yet further, the character reader recognition logic 58 may comprise various elements for taking fast Fourier Transforms of the incoming binary digit sequence on the comparator output line 54 and for matching the Fourier Transform against prerecorded Fourier Transforms for each of the predetermined characters in the set to be recognized, the character being selected which provides the closest match.

The character reader recognition logic 58 provides a binary word output indicative of each recognized character on a character reader output bus 60, coupled as an input to a character reader result buffer 62 whose contents can be read by the data processing and control unit 28 via a result buffer bus 64.

In the event of the character reader recognition logic 58 not finding a sufficiently accurate match between the incoming sequence of binary digits from the comparator output line 54 and any stored results, it provides an error signal on a character reader error line 66 which is coupled as an input to the data processing and control unit 28. If the character reader recognition logic 58 functions by matching the input binary digits from the comparator output line 54 in a shift register with stored traces for different characters and no character can be found with fewer than a predetermined number of mismatches, then the character reader recognition logic 58 provides indication of that character with the least number of errors on the character reader output bus 60, and also signals to the data processing and control unit 28 with the error signal on the character reader error line 66 that the character recognized is an uncertain character. In a similar manner, if the character reader recognition logic 58 operates by Fourier Transform and cannot find a stored trace sufficiently close within predetermined limits to that of the incoming signals from the comparator output line 54, it provides indication of that character on the character reader output bus 60 whose stored trace is closest to the incoming trace and signals by means of the error signal on the character reader error line 66 that the indicated character is uncertain.

The output of the array address counter 56 is coupled as an input to the character reader recognition logic 58 so that it may know the position in the scanned array that the incoming binary digit represents. Similarly the output of the array address counter 56 is coupled as an input to the character reader result buffer 62 so that the character reader result buffer may know when the character reader recognition logic 58 has received a whole character. This means that the character reader result buffer 62 at least comprises a detector for detecting an array address corresponding to the completion of the scanning of each column in the image of the character 36. The character reader recognition logic 58 can also provide an output line to the character reader result buffer 62 indicative of the completion of recognition of a character for the character reader result buffer 62 to accept the incoming character.

The character processing unit 24 further comprises a document detector 68. The document detector 68 receives the signal from the comparator output line 54. In the preferred embodiment herein described, the document 10 is illuminated to reflect light on to the phototransistors 40, the characters 36 being printed in black, and the background (in the absence of a document 10) being dark. When the document 10 is interactive with the transducer assembly 18, white areas cause permanent or periodic raising of the signal on the comparator output line 54 to a logically true condition. The document detectors 68 therefore detect the presence of logically true signals on the comparator output line 54 and interprets this condition as being indicative of a document 10 being present. The document detector 68 provides indication of the document being present to the character reader recognition logic 58 so that the character reader recognition logic 58 may only function whilst a document is present at the transducer assembly 18.

The document detector 68 can be implimented otherwise than described, and may include a separate document detecting sensor so that the document detector 68 does not depend upon the signal from the comparator output line 54. The document detector 68 can comprise a separate photosensor, a separate magnetic sensor or, in its simplest form, a document sensing microswitch. All that is required of the document detector 68 is that it can sense when a document is present at the transducer 18.

The character reader recognition logic 58 is not absolutely dependent upon the reception of a document presence signal from the document detector 68 for determining the condition of a particular character in a document. Whilst it is advantageous to be made aware of the beginning of a document 10 so that the order of the following characters may be known, the characters on the document 10 may equally well be grouped in a particular manner whereby their positions on the document 10 may be known regardless of there being any indication of a document 10 becoming present at the transducer assembly 18.

The character processing unit 24 further comprises a serial-to-parallel convertor 70 coupled to receive the comparator output line 54 and to receive the binary address lines 44 from the array address counter 56. The serial-to-parallel convertor 70 accepts the serial stream of binary digits on the comparator output line 54 and converts them to a succession of sixty-four bit wide parallel binary words by loading each one of a series of one-bit registers in synchronism with the binary address of the binary address lines 44 , and by transferring the collective contents of the one-bit registers to a serial-to-parallel convertor output bus 72 on the transistion from address 111111 to address 000000. The serial-to-parallel convertor output bus 72 is provided as a data input to a document image store 74. The document image store 74 is also provided with the binary address on the binary address line 44 from the array address counter 56. Upon entering address state 000000, the document image store 74 accepts as input to be stored the sixty-four bit wide binary word on the serial-to-parallel convertor output bus 72.

The character processing unit 24 further comprises a pixel column counter 76. The pixel column counter 76 receives the array address on the binary address line 44 from the array address counter 56. Whenever the output of the array address counter 56 enters the 111111 state, the pixel column counter 76 increments its count by 1. The pixel column counter provides its count as an address input to the document image store 74. Thus, upon the completion of each new scanned column, the storage location in the document image store 74 is incremented by 1 so that each sixty-four bit parallel binary word on the serial-to-parallel connector input bus 72 is stored in a fresh sequential location in the document image store 74. The output of the document image store is made available to the data processing and control unit 28 via a document image store output bus 78. The document detector also provides its output to the pixel column counter 76 for the pixel column counter 76 to be inhibited from counting whenever a document is not present. Thus the document image store 74 only stores images whilst a document 10 is passing adjacently to the transducer assembly 18.

The character processing unit 24 further comprises a coarse character detector 80. The coarse character detector 80 monitors the incoming binary digit stream on the comparator output line 54, and determines when the transducer assembly 18 is interactive with a character 36 on the document 10. The exact manner of operation of the coarse character detector 80 is not important to the present invention. As one example, the coarse character detector 80 can decide that the transducer assembly 18 is interactive with a character 36 if more than a predetermined proportion of binary digits on the comparator output line 54 are logically false indicatively of the transducer assembly 18 being interactive with a plurality of dark areas in a printed character 36. Similarly, the coarse character detector 80 can pay attention to the array address from the array address counter 56, and decide that the transducer assembly 18 is interactive with a character 36 if logically false output of the comparator 52 occurs both at the top and the bottom of a scan. The coarse character detector 80 can employ combinations of such criteria for determining when the transducer assembly 18 is interactive with a character 36 on the document 10.

The coarse character detector 80 provides an output indicative of the transducer assembly 18 being interactive with a character 36 on the document 10 to a detected character column address store 82. The detected character column address store 82 is in receipt of the output of the pixel column counter 76 as a data input. Each time the coarse character detector 80 provides indication that the transducer assembly 18 has commences interaction with a character 36 on the document 10, the detected character column address store 82 is triggered to store the output of the pixel column counter 76 in a fresh sequential location. The detected character column address store 82 therefore maintains a sequential record of the addresses in the document image store 74 whereat the stored image for each character in turn commences. The contents of the detected character column address store 82 are made available to the data processing and control unit 28 via a column address store output bus 84.

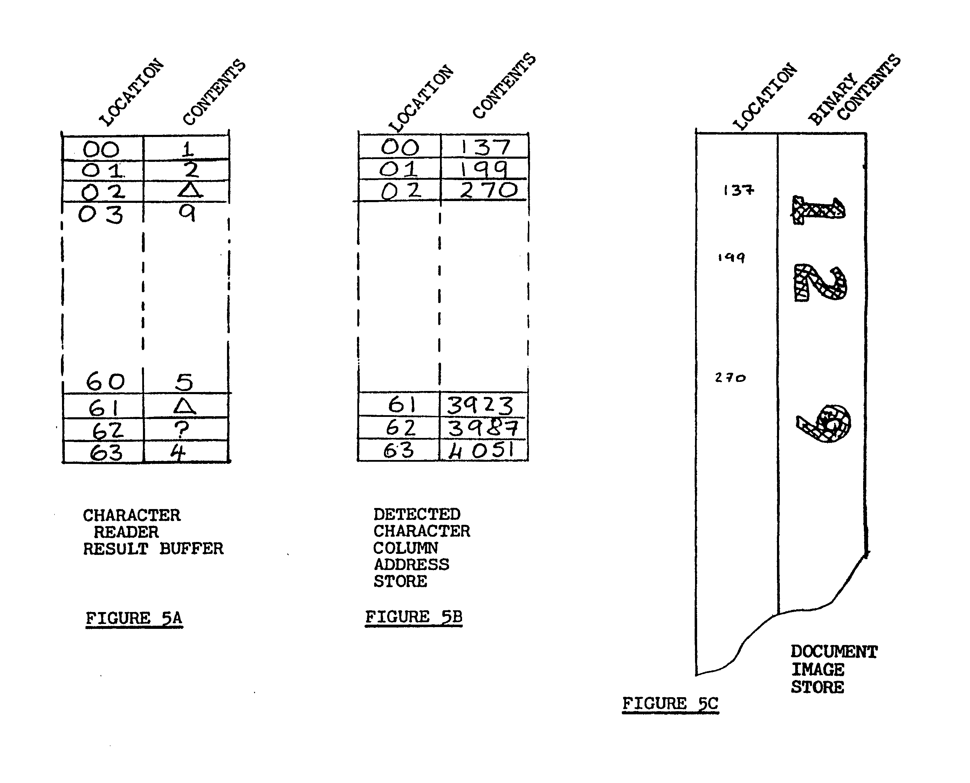

Figure 5A shows exemplary contents of the character reader result buffer 62. In the preferred embodiment, it is taken that the document 10 comprises sixty-four possible character locations in the sequence of characters 20. The character reader result buffer 62 therefore comprises sixty-four locations for storing the output of the character reader recognition logic 58. Though not shown, the address of the character reader result buffer 62 of the document image store 74 and of the detected character column address store 82 is reinitiallised to zero upon each detection of the leading edge of a document by the document detector 68. The character reader recognition logic 58 not only detects characters, but also spaces. Thus each detected character in turn is stored at a next sequential location in the character reader result buffer 62.

The triangular symbol is indicative of a space, and the question mark symbol is indicative of an uncertain character. Thus, upon presentation of each new document 10, the binary code for recognized characters is stored in sequential locations within the character reader result buffer 62.

Figure 5B shows corresponding exemplary contents for the detected character column address store 82. Having been initiallised by the detection of a document edge, the detected character column address store stores sequential image start locations in the document image store 74. Figure 5B should be considered in conjunction with Figure 5C and Figure 5A.

Figure 5C shows exemplary corresponding contents of the document image store 74. In the document image store, the image of the first character decoded, a number one, commences at storage location 137. Thus the detected character column address store 82 has as its first entry the address 137 of the first character image. Similarly, the image of the second decoded character, the number two, commences at location 199 within the document image store 74. Thus the detected character column address store 82 has as its second entry the start address 199 for the image of the second character in the document image store 74. The detected character column address store ignores all space characters in consequence of the action of the coarse character detector 80. Thus the third entry in the detected character column address store 82 is the start address of the next actual character image in the document image store 74. This image commences at storage location 270, and consequently the third entry in the detected character column address store is 270 corresponding, in fact, to the fourth decoded character in the character reader result buffer 62, but to the third non-space decoded character in the character reader result buffer 62. The spacing of the images in the document image store 74 is approximately sixty-four columns wide, but need not be exactly so.

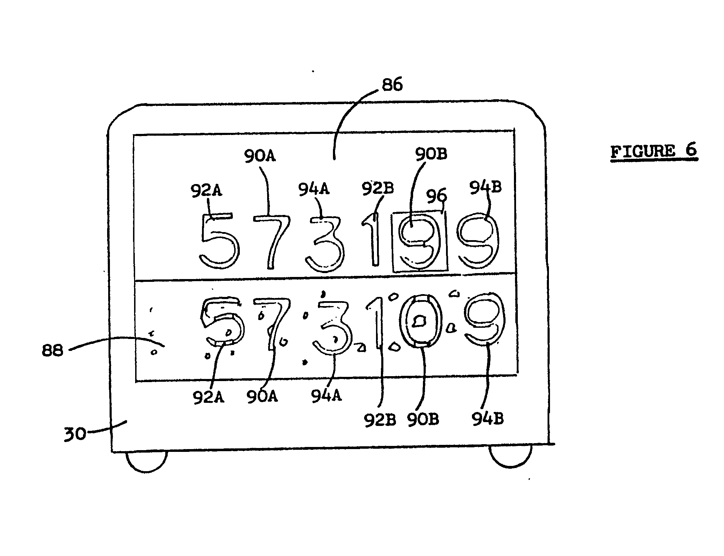

Figure 6 shows an exemplary display on the visual display unit 30. The visual display unit 30 comprises an upper half-screen 86 and a lower half-screen 88. The visual display unit is operable, in a manner well-known in the art, to accept binary characters representative of visual characters to be displayed and to display the corresponding visual character in the upper-half screen 86. The visual display unit 30 is similarly operable, in a manner known in the art, to accept one-to-one binary digits representative of individual pixels for displaying a complex captured image on the lower-half screen 88. The manner of memory mapping and scanning of the visual display unit 30 is not part of the present invention, save that a first portion of its screen 86 is operable to display visual images in response to received characters indicative thereof, and that a second portion is operable in a one-to-one manner to disply pixel digits representative of the captured image.

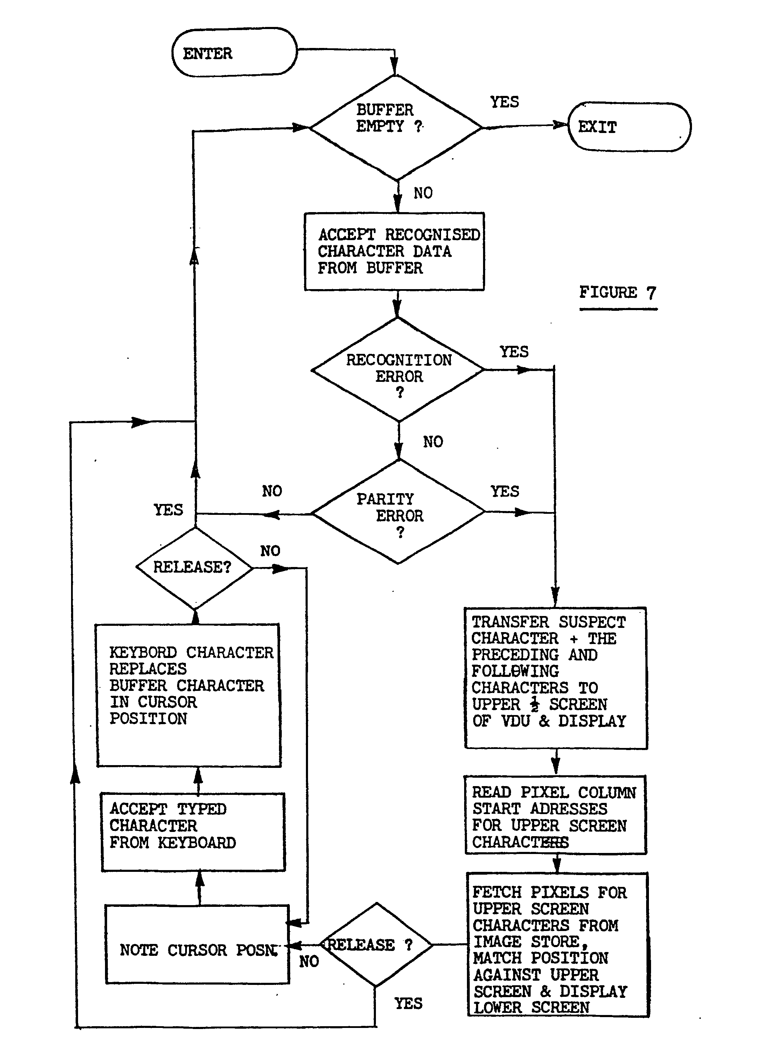

When the data processing and control 28 receives the error signal indication of an uncertain character from the character reader recognition logic 58, or itself detects a parity error in the data retrieved from the character reader result buffer 62, it performs a display and correction operation. The display and correction operation is further illustrated in Figure 7 which is to be read in conjunction with Figure 6. The data processing and control unit 28 firstly transfers the code for the suspect character 90A, 90B, and the code for the preceding character 92A, 92B, and the following character 94A, 94B, to the visual display unit 30 for display in the upper-half screen 86. In the example shown, the document has thrown up two suspect characters 90A, 90B. They may be separated by very many intervening characters, but these are ignored by the data processing and control unit 28, and only the two suspect characters 90A and 90B and their immediate neighbours 92A, 92B, 94A, 94B are displayed in the upper-half screen 86.

Ignoring the coded space symbols, the data processing and control unit 28 then calculates at which location in the detected character column address store 82 the addresses for the corresponding images in the image store 74 will lie. The data processing and control unit 28 calls out the stored image from the selected addresses in the document image store 74, and displays the images on the lower-half screen 88 with each character in the upper-half screen 86 aligned with its corresponding character image in the lower-half screen 88.

The image and the decoded characters thus having been displayed, the operator examines the visual display unit 30 to correct any erroneous characters. In the example shown in Figure 6, the first suspect character 90A is correct and therefore requires no correction, but the second suspect character 90B is incorrect and, instead of being the number 9, should be the number 0. The operator therefore shifts a cursor on the visual display unit upper-half screen 86 to overlie the second uncertain character 90B. The operator then presses the 0 key to change the erroneous number 9 to 0. Having thus corrected all of the erroneous characters, the operator presses a predetermined key, such as the escape key, to release the system from correction and to allow continued operation. Had there been no characters in error, the system could have been immediately released.

Whilst the present system in the preferred embodiment has been described for capturing the image of only one document 10 at a time, it is to be appreciated that the image of a sequence of documents 10 can be corrected. The character reader result buffer 62, the document image store 74, and the detected character column address store 82 are merely extended to cover the number of characters in a sequential plurality of documents. Whenever the last one in a batch of documents has passed through, the start addresses in each of these stores is reinitiallised to zero. Similarly, the stores may be replaced by roll-over stores which do not need initiallising.

In the operation of the present system, it is possible to omit the character reader result buffer 62 and to send the decoded characters directly to the data processing and control unit.

It is to be appreciated that the storing, by the detected character address store (82), of the storage locations in the document image store (74) whereat only non-space images are stored effects a saving in storage space in the overall system without any sacrifice in overall performance.

## Claims

1. A system for reading characters (36) from a document (10), said system comprising: a transducer (18) for scanning the document (10) and for providing, as an output (22), a serial succession of signals representative of images on said document (10); a character reader (24,58,62) for receiving and decoding said output (22) of said transducer (18) and for providing a data output (64) representative of the particular character (36) scanned by said transducer (18) whenever said output (22) of said transducer (18) is representative of one from a predetermined plurality of characters, and for providing an error output (66) whenever said output (22) of said transducer (18) is insufficient for the accurate decoding of an uncertain character (90B); an image store (70,74) for retrievably storing an image, derived from the output (22) from said transducer (18); and a control unit (28) for receiving said data and said error outputs (64,66) from said reader (24,58,62); said control unit being operable in response to said error signal (66) from said reader (24,58,62) to perform a display and correction operation including: transfer from said data output (64) of said reader (24,58,62), to a first portion (86) of a display unit (30), in response to said uncertain character (90B), of a representation of said data output of said character reader; and transfer of said image to a second portion (88) of said display unit (30); said control unit (28) being operable thereafter to receive, in place of said data output (64) of said reader (24,58,62) for said uncertain character (90B), an externally provided signal indicative of the true nature of said uncertain character (90B); said system being characterized by comprising a coarse character detector (80) for receiving said output (22) from said transducer (18) and for providing a detected character output (90) indicative of each occasion of said transducer (18) scanning marks on the document representative of any from among said predetermined plurality of characters which are not spaces; and an address store (82) for receiving said output from said character detector (80) and for monitoring and storing (Fig. 5A, Fig. 5B, Fig. 5C) the storage location in said image store (70,74) whereat said image from said transducer (18) is stored for each character detected by said coarse character detector (80); said control unit (28) being operable to receive the storage location from said address store (82) for said uncertain character (90B) and to apply said received storage location as a retrieval address to said image store (70,74) for the retrieval therefrom of said stored image from said transducer (18), derived from scanning said uncertain character (90B), for transfer to said second portion (88) of said display unit (30).

2. A system according to Claim 1 wherein said data output (64) of said reader (24,58,62), transferred to said first portion (86) of said display unit (30), is representative of the most probable character from among said predetermined plurality of characters.

3. A system for reading characters (36) from a document (10), according to Claims 1 or 2, wherein said character reader (24,58,62) matches the data from said transducer (18) in a shift register with stored traces for different ones of said predetermined plurality of characters and, where no character can be found with fewer than a predetermined number of mismatches, said character reader transfers to said first portion (86) of said display unit (30) data representing the character with the least number of mismatches.

4. A system according to Claim 1 or Claim 2 wherein said character reader (24,56 62) operates by Fourier Transform, and when it cannot find a stored trace sufficiently close within predetermined limits to that represented by the data from the transducer, said character reader transfers to said first portion (86) of said display unit (30) data representing the character whose stored trace is closest to the trace represented by the data from the transducer.

5. A system according to Claim 4 wherein said transducer (18) is operable to scan said document (10) by relative linear movement between said document (10) and said transducer (18), wherein said transducer (18) is operable to scan said document (10) in a direction transverse to said rectilinear movement; and wherein said image store (70,74) comprises a column address counter (76) operable to increment the storage location in said image store (70,74) upon completion of each instance of said scanning transversely to said direction of movement; said address store (82) being operable to store the count of said address counter (76) in response to each instance of said character detector (80) providing output indicative of said transducer (18) scanning a character (10).

6. A system according to Claim 5, comprising a document detector (68), operable to detect when said transducer (18) is interactive with a document (10) and to provide an output indicative thereof; said output of said document detector (68) being coupled to inhibit said address counter (76) from incrementing whenever said transducer (18) is not interactive with a document (10).

7. A system according to Claim 6 wherein said address store (82) is reset to zero on detection of the leading edge of every document (10).

8. A system according to Claim 6 wherein said address store (82) is reset to zero when the last one in a batch of documents has passed through the system.

9. A system according to any of the preceding claims wherein said control unit (28) is operable to align the representations of deciphered characters (92,90) in said first portion (86) of said display unit (30) with the corresponding images thereof in said second portion (88) of said display unit (30), for one-to-one comparison therebetween.

10. A system according to any of the claims 5 to 8, or claim 9 when dependent on claim 5 wherein said transducer (18) comprises a plural element array (40), transversely disposed to said direction (38) of rectilinear movement, each of the elements (40) in said plural element array being operable to detect that portion of the document (10) adjacent thereto; and each of said elements (40) in said plural element array being individually operable, in sequence, to provide output indicative of the detected state of the portion of the document (10) adjacent thereto.

11. A system according to any of Claims 6 to 8, or Claims 9 to 10 when dependent on Claim 6, wherein said document detector (68) is operable to respond to said output of said transducer (18) to provide said indication of said transducer (18) being interactive with a document (10).

12. A system according to any of the preceding claims, wherein said control unit (28) is operable to display an area of error on a document (10) by transferring to said first portion (86) of said display unit (30) the data output (64) of said reader (58,62) for the character preceding said uncertain character (90B) and the data output (64) of said reader (58,62) for the character following said uncertain character (90B), said control unit (28) being further operable to transfer to said second portion (88) of said display unit (30), the image from said transducer (18) stored in said image store (74) for said character preceding said uncertain character (90B) and the image from said transducer (18), stored in said image store (74), for the character following said uncertain character (90B).

13. A system according to Claim 12 wherein said control unit (28) is operative to display, simultaneously on said display unit, two or more areas of error, separated from one another on a document, without displaying intervening characters.

14. A system according to any of the preceding claims, wherein said control unit (28) is operable to perform an error checking operation upon the sequence of characters represented by said data output (64) of said reader (58,62); said control unit being operable to perform said display and correction operation for any character rendered suspect by said error checking operation.

**Revendications**

1. Système pour la lecture de caractères (36) d'un document (10), système comprenant un transducteur (18) pour balayer le document (10) et fournir comme signal de sortie (22), une succession en série de signaux représentant les images du document ; un lecteur de caractères (24, 58, 62) pour recevoir et décoder le signal de sortie (22) du transducteur (18) et fournir un signal de sortie de données (64) représentant le caractère particulier (36) balayé par le transducteur (18) chaque fois que le signal de sortie (22) du transducteur (18) représente une forme prédéterminé de caractères et fournissant un signal de sortie d'erreur (66) chaque fois que le signal de sortie (22) du transducteur (18) n'est pas suffisant pour un décodage précis d'un caractère incertain (90B), une mémoire d'image (70, 74) pour enregistrer de manière récupérable une image dérivée du signal de sortie (22) du transducteur (18) et une unité de commande (28) pour recevoir les données et les signaux de sortie d'erreur (64, 66) du lecteur (24, 58, 62), l'unité de commande pouvant travailler en réponse au signal d'erreur (66) du lecteur (24, 58, 62) soit pour effectuer des opérations d'affichage et de correction comprenant : le transfert de la sortie de données (64) du lecteur (24, 58, 62) vers une première partie (86) d'une unité d'affichage (30) en réponse à ce caractère incertain (90B) d'une représentation de la sortie de données du lecteur de caractères et transférer cette image dans une seconde partie (88) de l'unité d'affichage (30), l'unité de commande (28) pouvant recevoir alors à la place de la sortie de données (64) du lecteur (24, 58, 62) correspondant au caractère incertain (90B), un signal d'origine externe indiquant la nature vraie du caractère incertain (90B) ; système caractérisé en ce qu'il comprend un détecteur de caractères grossiers (80) pour recevoir le signal de sortie (22) du transducteur (18) et fournir un signal de sortie de caractère détecté (90) indiquant à chaque fois que le transducteur (18) balaie des repères sur le document représentant l'un d'un ensemble de caractères qui ne sont pas des espacements ; et une mémoire d'adresses (82) pour recevoir le signal de sortie du détecteur de caractère (80) et contrôler et mettre en mémoire (figure 5A, figure 5B, figure 5C) l'emplacement de mémoire dans la mémoire d'image (70, 74) auquel est inscrite l'image du transducteur (18) pour chaque caractère détecté par le détecteur de caractères grossiers (80), cette unité de commande (28) pouvant recevoir l'emplacement de mémoire de la mémoire d'adresses (82) pour un caractère incertain (90B) et fournir cet emplacement de mémoire reçu comme adresse récupérable à la mémoire d'image (70, 74) pour y récupérer l'image inscrite en mémoire par le transducteur (18), en fonction du balayage du caractère incertain (90B) pour transférer cette information à la seconde partie (88) de l'unité d'affichage (30).

2.  Système selon la revendication 1, caractérisé en ce que la sortie de données (64) du lecteur (24, 58, 62) transférée à la première partie (86) de l'unité d'affichage (30) représente le caractère le plus probable parmi l'ensemble prédéterminé de caractères.

3.  Système pour la lecture de caractères (36) d'un document (10) selon les revendications 1 ou 2, caractérisé en ce que le lecteur de caractères (24, 58, 62) fait coïncider les données du transducteur (18) du registre à décalage avec les traces mises en mémoire pour différents caractères de l'ensemble prédéterminé de caractères, et lorsqu'aucun caractère ne peut être trouvé avec un nombre de défauts de coïncidence inférieur à un nombre prédéterminé, le lecteur de caractères transfère cette première partie (86) des données de l'unité d'affichage (30) correspondant au caractère présentant le nombre le plus faible de défauts de coïncidence.

4.  Système selon la revendication 1 ou selon la revendication 2, caractérisé en ce que le lecteur de caractères (24, 56, 62) utilise une transformation de Fourier et lorsqu' il ne peut trouver une trace en mémoire qui soit suffisamment proche dans les limites prédéterminées de celles représentées par les données du transducteur, le lecteur de caractères transfère à cette première partie (86) de l'unité d'affichage (30), les données représentant le caractère dont la trace mise en mémoire est la plus proche de la trace représentée par les données fournies par le transducteur.

5.  Système selon la revendication 4, caractérisé en ce que le transducteur (18) peut balayer le document (10) par un mouvement linéaire relatif entre le document (10) et le transducteur (18), ce transducteur (18) balayant le document (10) dans une direction transversale au mouvement rectiligne et la mémoire d'image (70, 74) comporte un compteur d'adresses de colonne (76) pour incrémenter la position de mémoire dans la mémoire d'image (70, 74) à chaque fois que se termine le balayage transversal par rapport à la direction du mouvement, cette mémoire d'adresses (82) pouvant inscrire l'état du compteur d'adresses (76) chaque fois que le détecteur de caractères (80) donne un signal de sortie indiquant que le transducteur (18) balaie un caractère (10).

6.  Système selon la revendication 5, caractérisé en ce qu'il comporte un détecteur de document (68) qui détecte si le transducteur (18) coopère avec un document (10) et fournit un signal de sortie indiquant cette situation, ce signal de sortie du détecteur de document (68) étant couplé pour interdire l'incrémentation du compteur d'adresses (76) chaque fois que le transducteur (18) ne coopère pas avec un document (10).

7. Système selon la revendication 6, caractérisé en ce que la mémoire d'adresses (82) est remise à zéro lors de la détection du bord avant d'un document (10).

8. Système selon la revendication 6, caractérisé en ce que la mémoire d'adresses (82) est remise à zéro lorsque le dernier d'un lot de documents a passé à travers le système.

9. Système selon l'une quelconque des revendications précédentes, caractérisé en ce que l'unité de commande (28) aligne les représentations des caractères déchiffrés (92, 90) dans la première partie (86) de l'unité d'affichage (30) sur les images correspondantes dans la seconde partie (88) de l'unité d'affichage (30) pour permettre une comparaison élément par élément.

10. Système selon l'une quelconque des revendications 5 à 8 ou la revendication 9 dépendante de la revendication 5, caractérisé en ce que le transducteur (18) comprend un réseau à plusieurs éléments (40) disposés transversalement par rapport à la direction (38) pour un mouvement linéaire, chacun des éléments (40) du réseau à plusieurs éléments pouvant détecter la partie du document (10) qu'il lui correspond, et chacun des éléments (40) du réseau de plusieurs éléments peut travailler séparément, en séquence pour fournir un signal de sortie indiquant l'état de détection de la partie du document (10) qui lui correspond.

11. Système selon l'une des revendications 6 à 8 ou des revendications 9 à 10 en liaison avec la revendication 6, caractérisé en ce que le détecteur de document (68) répond au signal de sortie du transducteur (18) pour fournir l'indication que le transducteur (18) coopère avec un document (10).

12. Système selon l'une quelconque des revendications précédentes, caractérisé en ce que l'unité de commande (28) affiche une zone d'erreur sur un document (10) en transférant dans la première partie (86) de l'unité d'affichage (30), le signal de sortie de données (64) du lecteur (58, 62) du caractère précédent le caractère incertain (90B) et la sortie de données (64) du lecteur (58, 62) du caractère suivant le caractère incertain (90B), cette unité de commande (28) pouvant en outre transférer vers la seconde partie (88) de l'unité d'affichage (30), l'image du transducteur (18) inscrite dans la mémoire d'image (74) et correspondant au caractère précédent le caractère incertain (90B) ainsi que l'image du transducteur (18) enregistrée dans la mémoire d'image (74) pour le caractère suivant le caractère incertain (90B).

13. Système selon la revendication 12, caractérisé en ce que l'unité de commande (28) affiche simultanément avec l'unité d'affichage deux ou plusieurs zones d'erreur séparées sur un document sans afficher les caractères intermédiaires.

14. Système selon l'une quelconque des revendications précédentes, caractérisé en ce que l'unité de commande (28) effectue une opération de contrôle d'erreur sur la suite de caractères représentée par la sortie de données (64) du lecteur (58, 62), cette unité de commande pouvant effectuer les opérations d'affichage et de correction pour chaque caractère rendu suspect par les opérations de contrôle d'erreur.

**Patentansprüche**

1. System zum Lesen von Zeichen (36) von einem Dokument (10), wobei das System umfaßt:

   einen Wandler (18) zum Abtasten des Dokumentes (10) und zur Erzeugung einer Reihe von Bildern auf dem Dokument (10) repräsentierenden Signalen als Ausgangssignal (22); einen Zeichenleser (24, 58, 62) zum Empfangen und Dekodieren des Ausgangssignals (22) des Wandlers (18) und zur Erzeugung eines Datenausgangssignals (64), das das bestimmte Zeichen (36) repräsentiert, welches vom Wandler (18) abgetastet worden ist, jedesmal wenn das Ausgangssignal (22) des Wandlers (18) ein Zeichen aus einer bestimmten Anzahl von Zeichen repräsentiert, und zur Erzeugung eines Fehlerausgangssignals (66), jedesmal wenn das Ausgangssignal (22) des Wandlers (18) für die genaue Dekodierung eines unbestimmten Zeichens (90B) ungeeignet ist;

   einen Bildspeicher (70, 74) zum Abspeichern eines Bildes, das aus dem Ausgangssignal (22) vom Wandler (18) abgeleitet ist; und

   eine Steuereinheit (28) zum Empfang der Daten- und Fehlerausgangssignale (64, 66) vom Leser (24, 58, 62); wobei die Steuereinheit auf das Fehlersignal (66) vom Leser (24, 58, 62) anspricht, um eine Anzeige und eine Korrekturoperation durchzuführen, welche die Schritte aufweist:

Vom Datenausgang (64) des Lesers (24, 58, 62) zu einem ersten Abschnitt (86) einer Anzeigeeinheit (30) nach Ansprechen auf das unbestimmte Zeichen (90B) eine Darstellung der Datenausgangssignale des Zeichenlesers zu übertragen; und

das Bild zu einem zweiten Abschnitt (88) der Anzeigeeinheit (30) zu übertragen;

wobei die Steuereinheit (28) anschließend an Stelle der Datenausgangssignale (64) des Lesers (24, 58, 62) für das unbestimmte Zeichen (90B) ein extern erzeugtes Signal empfängt, das die wahre Art des unbestimmten Zeichens (90B) anzeigt;

wobei das System gekennzeichnet ist durch einen Grobzeichendetektor (80) zum Empfang des Ausgangssignals (22) vom Wandler (18) und zur Erzeugung eines einem detektierten Zeichen zugeordneten Ausgangssignals (90), das jede Gelegenheit anzeigt, bei welcher der Wandler (18) Markierungen auf dem Dokument abtastet, die ein Zeichen aus einer bestimmten Anzahl von Zeichen repräsentiert, welche keine Leerzeichen sind; und

einen Adressenspeicher (82) zum Empfang des Ausgangssignals vom Zeichendetektor (80) und zur Überwachung und zum Abspeichern der Speicherstelle (Fig. 5A, Fig. 5B) im Bildspeicher (70, 74), wobei das Bild vom Wandler (18) für jedes Zeichen abgespeichert wird, das vom Grobzeichendetektor (18) detektiert worden ist;

wobei die Steuereinheit (28) die Speicheradresse vom Adressenspeicher (82) für das unbestimmte Zeichen (90B) empfängt und die empfangene Speicheradresse als Wiedergewinnungsadresse an den Bildspeicher (70, 74) zur Wiedergewinnung des abgespeicherten Bildes vom Wandler (18), welches vom Abtasten des unbestimmten Zeichens (90B) abgeleitet worden ist, übermittelt, um es an den zweiten Abschnitt (88) der Anzeigeeinheit (30) zu übertragen.

2. System nach Anspruch 1,
bei welchem das an den ersten Abschnitt (86) der Anzeigeeinheit (30) übertragene Datenausgangssignal (64) des Lesers (24, 58, 62) das wahrscheinlichste Zeichen aus der bestimmten Anzahl von Zeichen repräsentiert.

3. System zum Lesen von Zeichen (36) von einem Dokument (10) nach den Ansprüchen 1 oder 2,

bei welchem der Zeichenleser (24, 58, 62) die Daten vom Wandler (18) in einem Schieberegister an abgespeicherte Linienzüge für unterschiedliche Zeichen aus einer bestimmten Anzahl von Zeichen anpaßt und, wenn kein Zeichen bei einer geringeren als einer bestimmten Anzahl von Fehlanpassungen gefunden werden kann, der Zeichenleser an den ersten Abschnitt (86) der Anzeigeeinheit (30) die Daten überträgt, die das Zeichen mit der geringsten Anzahl von Fehlanpassungen repräsentieren.

4. System nach Anspruch 1 oder Anspruch 2,
bei welchem der Zeichenleser (24, 56, 62) mit Hilfe der Fourier-Transformation arbeitet und, wenn er keinen abgespeicherten Linienzug finden kann, der innerhalb vorbestimmter Grenzen ausreichend dicht an dem von den Daten vom Wandler repräsentierten Linienzug liegt, an den ersten Abschnitt (86) der Anzeigeeinheit (30) die Daten überträgt, die das Zeichen repräsentieren, dessen abgespeicherter Linienzug demjenigen Linienzug am nächsten kommt, der von den Daten vom Wandler repräsentiert wird.

5. System nach Anspruch 4,
bei welchem der Wandler (18) das Dokument (10) durch eine lineare Relativbewegung zwischen dem Dokument (10) und dem Wandler (18) abtastet, wobei der Wandler (18) das Dokument (10) in einer Richtung quer zur geradlinigen Bewegung abtastet; und bei welchem der Bildspeicher (70, 74) einen Spaltenadressenzähler (76) aufweist, der die Speicheradresse im Bildspeicher (70, 74) nach Beendigung jedes Abtastvorganges quer zur Richtung der Bewegung inkrementiert; wobei der Adressenspeicher (82) den Zählwert des Adressenzählers (76) als Antwort auf jeden Abtastvorgang des Zeichendetektors (80) abspeichert, welcher ein Ausgangssignal erzeugt, das anzeigt, daß der Wandler (18) ein Zeichen (10) abtastet.

6. System nach Anspruch 5,
welches einen Dokumentendetektor (68) aufweist, der detektiert, wann der Wandler (18) in Wechselwirkung mit einem Dokument (10) steht, und ein Ausgangssignal erzeugt, das dieses anzeigt; wobei der Ausgang des Dokumentendetektors (68) so angeschlossen ist, daß der Adressenzähler (76) am Inkrementieren gehindert wird, wenn der Wandler (18) nicht in Wechselwirkung mit einem Dokument (10) steht.

7. System nach Anspruch 6,

bei welchem der Adressenspeicher (82) bei Erfassung der vorlaufenden Kante jedes Dokumentes (10) auf Null zurückgesetzt wird.

8. System nach Anspruch 6,
bei welchem der Adressenspeicher (82) auf Null zurückgesetzt wird, wenn das letzte Dokument in einem Stapel von Dokumenten das System durchlaufen hat.

9. System nach einem der vorangegangenen Ansprüche,
bei welchem die Steuereinheit (28) die Darstellungen der entschlüsselten Zeichen (92, 90) im ersten Abschnitt (86) der Anzeigeeinheit (30) an deren entsprechende Bilder im zweiten Abschnitt (88) der Anzeigeeinheit (30) für einen Eins-zu-Eins-Vergleich zwischen diesen anpaßt.

10. System nach einem der Ansprüche 5 bis 8 oder Anspruch 9, sofern dieser vom Anspruch 5 abhängig ist,
bei welchem der Wandler (18) ein Mehrelementenfeld (40) aufweist, das quer zur Richtung (88) der geradlinigen Bewegung angeordnet ist, wobei jedes Element (40) im Mehrelementenfeld den zu diesem nächstgelegenen Abschnitt des Dokumentes (10) erfaßt; und wobei jedes Element (40) im Mehrelementenfeld einzeln der Reihe nach betrieben wird, um ein Ausgangssignal zu erzeugen, das den detektierten Zustand des nächstgelegenen Abschnittes des Dokumentes (10) anzeigt.

11. System nach einem der Ansprüche 6 bis 8 oder 9 bis 10, sofern diese vom Anspruch 6 abhängig sind,
bei welchem der Dokumentendetektor (68) auf das Ausgangssignal des Wandlers (18) anspricht, um eine Anzeige abzugeben, das der Wandler (18) in Wechselwirkung mit einem Dokument (10) steht.

12. System nach einem der vorangegangenen Ansprüche,
bei welchem die Steuereinheit (28) ein Fehlerfeld auf einem Dokument (10) anzeigt, indem die Datenausgangssignale (64) des Lesers (58, 62) für das dem unbestimmten Zeichen (90B) vorausgegangene Zeichen und die Datenausgangssignale (64) des Lesers (58, 62) für das dem unbestimmten Zeichen (90B) folgende Zeichen an den ersten Abschnitt (86) mit der Anzeigeeinheit (30) übertragen werden, wobei die Steuereinheit (28) außerdem an den zweiten Abschnitt (88) der Anzeigeeinheit (30) das im Bildspeicher (74) gespeicherte Bild vom Wandler (18) für das dem unbestimmten Zeichen (90B) vorangegangene Zeichen und das im Bildspeicher (74) gespeicherte Bild vom Wandler (18) für das dem unbestimmten Zeichen (90B) folgende Zeichen überträgt.

13. System nach Anspruch 12,
bei welchem die Steuereinheit (28) gleichzeitig auf der Anzeigeeinheit zwei oder mehrere voneinander auf einem Dokument getrennte Fehlerfelder ohne Anzeige von dazwischenliegenden Zeichen anzeigt.

14. System nach einem der vorangegangenen Ansprüche,
bei welchem die Steuereinheit (28) eine Fehlerprüfoperation in der Reihenfolge der von den Datenausgangssignalen (64) des Lesers (58, 62) repräsentierten Zeichen durchführt; wobei die Steuereinheit die Anzeige- und Korrekturoperation für ein Zeichen durchführt, das durch die Fehlerprüfoperation aufgefallen ist.

FIGURE 1

FIGURE 2

FIGURE 3

FIGURE 4

ARRAY ADDRESS COUNTER — 56

CHARACTER READER RECOGNITION LOGIC — 58

CHARACTER READER RESULT BUFFER — 62

SERIAL TO PARALLEL CONVERTOR — 70

DOCUMENT IMAGE STORE — 74

COARSE CHARACTER DETECTOR — 80

DETECTED CHARACTER COLUMN ADRESS STORE — 82

DOCUMENT DETECTOR — 68

PIXEL COLUMN COUNTER — 76

EP 0 140 527 B1

**FIGURE 5C — DOCUMENT IMAGE STORE**

| LOCATION | BINARY CONTENTS |
|---|---|
| 137 | 1 |
| 199 | 2 |
| 270 | 9 |

**FIGURE 5B — DETECTED CHARACTER COLUMN ADDRESS STORE**

| LOCATION | CONTENTS |
|---|---|
| 00 | 137 |
| 01 | 199 |
| 02 | 270 |
| 61 | 3923 |
| 62 | 3987 |
| 63 | 4051 |

**FIGURE 5A — CHARACTER READER RESULT BUFFER**

| LOCATION | CONTENTS |
|---|---|
| 00 | 1 |
| 01 | 2 |
| 02 | Δ |
| 03 | 9 |
| 60 | 5 |
| 61 | Δ |
| 62 | ? |
| 63 | 4 |

FIGURE 6

FIGURE 7